# FASCICULE DE BREVET EUROPEEN

(11) **EP 2 820 084 B1**
(45) Date de publication et mention de la délivrance du brevet: **24.05.2017**
(21) Numéro de dépôt: 13712874.0
(22) Date de dépôt: 01.03.2013
(51) Int. Cl.: C08L 27/16, F16L 9/12, F16L 11/04, H01B 3/44, H01M 4/62, C08K 5/00, C08K 5/11

(54) **COMPOSITION DE POLYFLUORURE DE VINYLIDÈNE**
POLYVINYLIDENFLUORIDZUSAMMENSETZUNG
COMPOSITION OF POLYVINYLIDENE FLUORIDE

(30) Priorité: 01.03.2012 FR 1251913
(43) Date de publication de la demande: 07.01.2015
(73) Titulaire: Arkema France, 92700 Colombes (FR)
(72) Inventeur: HOCHSTETTER, Gilles, F-27300 Bernay (FR); HUGON, Lionel, F-27300 Menneval (FR); LABOUR, Thomas, F-27930 AVIRON (FR); LANNUZEL, Thierry, F-69100 Villeurbanne (FR); RAMFEL, Barbara, F-27170 Barc (FR); AMIN-SANAYEI, Ramin, Malvern, Pennsylvania 19355 (US)
(74) Mandataire: Albani, Dalila
(86) Numéro de dépôt international: PCT/FR2013/050436
(87) Numéro de publication internationale: WO 2013/128142

(56) Documents cités:
- EP-A1- 0 608 939
- EP-A1- 1 454 954
- WO-A1-96/26980

## Description

### DOMAINE DE L'INVENTION

La présente invention concerne une composition polymérique fluorée, des procédés de fabrication de celle-ci, ainsi que des produits pouvant être fabriqués à partir de cette composition.

### ARRIERE-PLAN TECHNIQUE

Le transport de produits chimiques à l'état liquide ou gazeux dans des conduites présente de nombreux avantages : il est plus économique, une fois l'infrastructure mise en place ; il permet le transport de gros volumes ; il assure une grande sécurité d'approvisionnement, grâce à un débit régulier ; enfin, c'est un moyen plus sûr que le rail ou la route.

Il est connu d'utiliser, pour le transport de produits liquides ou gazeux, des tubes métalliques ou en matières plastiques, ou encore des tubes métalliques revêtus d'une ou plusieurs couches polymériques. Selon le fluide à transporter, ces tubes doivent répondre à de multiples exigences, notamment en ce qui concerne les propriétés de résistance mécanique (en particulier à l'impact), d'élasticité, de tenue au fluage, de tenue à la fatigue, de résistance au gonflement, de résistance chimique (à la corrosion, à l'oxydation, à l'ozone, aux produits chlorés...) et de résistance thermique.

Par exemple, on connaît des tuyaux comportant un ou plusieurs éléments métalliques garantissant la rigidité mécanique mais non étanches aux fluides transportés (par exemple des éléments en acier ou en fonte), ainsi que diverses couches à base de compositions polymériques, pour assurer l'étanchéité aux fluides transportés ainsi que l'isolation thermique. Typiquement, dans le cas des couches polymériques, le ratio épaisseur/diamètre est de l'ordre de 1/10. Ces compositions polymériques peuvent être à base de polyéthylène, mais cela limite la température d'utilisation des tuyaux à 60°C au maximum. Elles peuvent également être à base de polymères fluorés tels que le polyfluorure de vinylidène encore appelé fluorure de polyvinylidène (PVDF), convenant à des températures d'utilisation plus élevées, jusqu'à 130°C, et présentant une bonne résistance chimique et une bonne tenue thermique. Toutefois, le PVDF est très rigide, et pour cette raison, les homopolymères de PVDF sont souvent formulés ou utilisés en mélange avec des copolymères à base de fluorure de vinylidène (VDF) et éventuellement de plastifiant afin d'en réduire la rigidité.

Le document BE 832851 décrit des élastomères fluorés comprenant une proportion molaire de 50 à 85 % de VDF et de 15 à 25 % d'hexafluoropropylène (HFP) soit une proportion massique de 47 à 71 % de VDF et de 29 à 53 % d'HFP, qui sont utilisés pour la fabrication de corps moulés de PVDF comprenant de 1 à 30 % en poids d'élastomère fluoré. De telles compositions ont cependant une extrudabilité limitée, et ne permettent pas la fabrication de tubes ayant un ratio épaisseur/diamètre proche de 1/10. De plus, de telles compositions présentent une tenue à la fatigue insuffisante pour les applications décrites plus haut.

Le document EP 1342752 décrit des compositions à base de PVDF comprenant : (A) un homopolymère PVDF ou un copolymère à base de VDF ; (B) un élastomère fluoré ; (C) éventuellement un plastifiant. L'élastomère fluoré (B) est présent à hauteur de 0,5 à 10 parties en poids pour 100 parties d'homopolymère ou copolymère (A) et de 0 à 10 parties en poids de d'un plastifiant (C) avec la condition supplémentaire que la somme de (B) plus (C) soit de 0,5 à 10,5 parties en poids. Ces compositions correspondent aux proportions massique suivantes : 89,5 à 90,5% d'un homopolymère PVDF ou un copolymère à base de VDF (A) ; 0,5 à 9% d'un élastomère fluoré (B) ; 0 à 9% d'un plastifiant (C). Parmi les exemples sont divulguées des compositions comprenant de 2 à 4 % de copolymère VDF / HFP en tant qu'élastomère fluoré. Le taux de HFP dans le copolymère est de 30 à 40 %.

Le document EP 0608939 décrit des compositions polymériques comprenant, en poids, de 60 à 80 % de PVDF, de 20 à 40 % d'un copolymère thermoplastique de VDF et d'un autre comonomère fluoré (présent à hauteur de 5 à 25 % dans le copolymère), et de 5 à 20 % d'un plastifiant (par rapport à la somme du PVDF et du copolymère). Parmi les copolymères thermoplastiques envisagés figurent des copolymères VDF/HFP. Les teneurs en HFP indiquées dans les copolymères qui sont divulgués dans les exemples sont de l'ordre de 10 %.

Le document EP 0608940 décrit des compositions polymériques comprenant, en poids, de 25 à 75 % de PVDF et de 25 à 75 % de copolymère thermoplastique de VDF et d'un autre comonomère fluoré (présent à hauteur de 5 à 25 % dans le copolymère). Parmi les copolymères thermoplastiques envisagés figurent des copolymères VDF/HFP.

Le document WO 2006/045753 décrit des compositions polymériques à base de PVDF et d'un copolymère fluoré thermoplastique. Un plastifiant peut être ajouté à hauteur de 5 % au plus. La proportion de copolymère fluoré thermoplastique est par exemple de 20 à 55 % par rapport à la somme de celui-ci et du PVDF. Le copolymère fluoré thermoplastique peut par exemple être un copolymère de VDF et d'un autre comonomère fluoré, qui peut être présent en une teneur de 5 à 25 %. HFP est cité en tant que comonomère fluoré possible.

Le document WO 2007/006645 décrit des compositions comprenant un polymère fluoré thermoplastique (qui peut par exemple être un mélange d'homopolymère et de copolymère de VDF et d'un comonomère fluoré présent à hauteur de 0,1 à 15 % en moles dans le copolymère), un (per)fluoropolyéther et un per(halo)tluoropolymère.

Toutefois, les compositions polymériques proposées dans l'état de la technique ne donnent pas complètement satisfaction. En particulier, la tenue à la fatigue de certaines compositions polymériques de l'état de la technique est jugée insuffisante pour les applications visées, et tout particulièrement pour la fabrication de tuyaux pour le transport de produits de synthèse liquides ou gazeux (par exemple pour le transport d'hydrogène).

Il existe donc un réel besoin de mettre au point une composition polymérique alternative présentant des propriétés améliorées, notamment une tenue à la fatigue améliorée, afin de fabriquer des tuyaux et conduites demeurant mécaniquement fiables sur le long terme.

### RESUME DE L'INVENTION

L'invention concerne en premier lieu une composition comprenant :
- un homopolymère de polyfluorure de vinylidène ;
- un copolymère de fluorure de vinylidène et d'au moins un autre comonomère fluoré copolymérisable avec le VDF, le copolymère étant présent dans la composition dans une proportion massique de 10 à 35 % ;
- un plastifiant ;
la proportion massique en comonomère(s) autre que le fluorure de vinylidène dans le copolymère étant supérieure à 25 %.

Selon un mode de réalisation, le plastifiant est choisi parmi le sébaçate de dibutyle, le phtalate de dioctyle, le N-n-butylsulfonamide, les polyesters polymériques et les combinaisons de ceux-ci, et de préférence est du sébaçate de dibutyle.Le plastifiant est présent dans la composition dans une proportion massique de 1 à 5 %, de préférence de 2 à 3,5 %.

Selon un mode de réalisation, le copolymère est présent dans la composition dans une proportion massique de 20 à 35 %, de préférence de 25 à 35 %.

Selon un mode de réalisation, la proportion massique de (co) monomère(s) autre que le fluorure de vinylidène dans le copolymère est : supérieure ou égale à 26 %, et / ou inférieure ou égale à 40 %, de préférence inférieure ou égale à 37%.

Selon un mode de réalisation le comonomère fluoré est choisi parmi le fluorure de vinyle, le trifluoroéthylène, le chlorotrifluoroéthylène (CTFE), le 1,2-difluoroéthylène, tétrafluoroéthylène (TFE), l'hexafluoropropylène (HFP), les perfluoro(alky vinyl) éthers tels que le perfluoro(méthylvinyl)éther (PMVE), le perfluoro(éthylvinyl)éther (PEVE), le perfluoro(propylvinyl)éther (PPVE), le perfluoro(1,3-dioxozole); le perfluoro(2,2diméthyl-1,3dioxozole) (PDD), le produit de formule CF2=CF0CF2CF(CF3)OCF2CF2X dans laquelle X est SO₂F, CO₂H, CH₂OH; CH₂OCN ou CH₂OPO₃H, le produit de formule CF2=CFOCF2CF2SO2F; le produit de formule F(CF2)nCH2OCF=CF2 dans laquelle n est 1,2,3,4 ou 5, le produit de formule R1 CH2OCF=CF2 dans laquelle R1 est l'hydrogène ou F(CF2)z et z vaut 1, 2, 3, ou 4; le produit de formule R3OCF=CH2 dans laquelle R3 est F(CF2)z et z vaut 1, 2, 3, ou 4 ou encore le perfluorobutyléthylène (PFBE), le fluoroéthylènepropylène (FEP), le 3,3,3-trifluoropropène, le 2 trifluoromethyl-3,3,3-trifluoro-1-propène, le 2,3,3,3-tetrafluoropropène ou HFO-1234yf, le E-1,3,3,3-tetrafluoropropène ou HFO-1234zeE, le Z-1,3,3,3-tetrafluoropropène ou HFO-1234zeZ, le 1,1,2,3-tetrafluoropropene ou HFO-1234yc, le 1,2,3,3-tetrafluoropropène ou HFO-1234ye, le 1,1,3,3-tetrafluoropropène ou HFO-1234zc et le chlorotetrafluoropropène ou HCFO-1224.

Selon un mode de réalisation préféré, le comonomère est l'hexafluoropropylène

Selon un mode de réalisation, le copolymère est un terpolymère.

Selon un mode de réalisation, le copolymère est un élastomère.

Selon un mode de réalisation, la composition ci-dessus présente une tenue à la fatigue à l'état non vieilli supérieure ou égale à 50000 cycles, de préférence supérieure ou égale à 75000 cycles, de manière encore plus préférée supérieure ou égale à 100000 cycles en moyenne et / ou une tenue à la fatigue à l'état vieilli un mois à 150°C dans l'air supérieure ou égale à 5000 cycles, de préférence supérieure ou égale à 8000 cycles en moyenne.

Selon un mode de réalisation, la composition ci-dessus consiste en l'homopolymère de polyfluorure de vinylidène, le copolymère de fluorure de vinylidène et d'au moins un autre comonomère fluoré copolymérisable avec le VDF, et le plastifiant.

Selon un mode de réalisation préféré, qui sera décrit plus en détail ci-après, la composition ci-dessus consiste en l'homopolymère de polyfluorure de vinylidène, le copolymère VDF / HFP, et le plastifiant.

L'invention a également pour objet un procédé de fabrication de la composition ci-dessus, comprenant le mélange de l'homopolymère, du copolymère et du plastifiant. Ce procédé de fabrication comprend toute méthode qui permet d'obtenir un mélange homogène des différents constituants. Parmi ces méthodes, on peut notamment citer le mélange à l'état fondu ou sec.

Plus particulièrement, la composition selon l'invention est préparée par mélange à l'état fondu de tous les constituants, sur un outil de compoundage comme une extrudeuse bi-vis, un co-malaxeur ou un mélangeur interne ou à cylindre.

Selon un mode de réalisation, l'homopolymère et le copolymère sont sous forme sèche lors du mélange, de préférence sous forme de poudres, et de préférence le mélange avec le plastifiant est effectué à l'état fondu sur un outil de compoundage comme une extrudeuse bi-vis, un co-malaxeur ou un mélangeur interne ou à cylindre.

Selon un mode de réalisation, le procédé ci-dessus comprend le mélange de l'homopolymère et du copolymère sous forme de latex, le séchage du mélange d'homopolymère et de copolymère, et la combinaison du mélange séché avec le plastifiant, est effectué à l'état fondu sur un outil de compoundage comme une extrudeuse bi-vis, un comalaxeur ou un mélangeur interne ou à cylindre.

La composition selon l'invention obtenue par le procédé de fabrication décrit ci-dessus peut être ensuite transformée pour une utilisation sous forme de tuyaux, de câbles, notamment à l'aide d'outils tels qu'une extrudeuse munie d'une filière adaptée ou bien pour une utilisation comme liants de particules conductrices.

L'invention a également pour objet un tuyau de transport terrestre de produits à l'état gazeux, fabriqué à partir de la composition susmentionnée.

Selon un mode de réalisation, le tuyau susmentionné est pour le transport de produits de synthèse, notamment pour le transport d'hydrogène, d'oxygène, de vapeur d'eau, de monoxyde de carbone, d'ammoniac, de fluorure d'hydrogène, d'acide chlorhydrique, de sulfure d'hydrogène, de tout gaz issu du craquage des hydrocarbures, ou de mélanges de ceux-ci.

L'invention a également pour objet un tuyau de transport terrestre de produits à l'état liquide, fabriqué à partir de la composition susmentionnée.

Selon un mode de réalisation, le tuyau susmentionné est pour le transport d'eau, de solvants ou de mélanges de ceux-ci.

Selon un mode de réalisation, le tuyau susmentionné est un tuyau souterrain pour station-service ou un tuyau d'alimentation en carburant pour véhicules.

L'invention a également pour objet un câble électrique fabriqué à partir de la composition susmentionnée.

L'invention a également pour objet un liant de particules conductrices pour une batterie rechargeable, fabriqué à partir de la composition susmentionnée.

L'invention a également pour objet l'utilisation de la composition décrite ci-dessus, pour la fabrication de tuyaux, câbles électriques ou liants de particules conductrices susmentionnés.

La présente invention permet de surmonter les inconvénients de l'état de la technique. Elle fournit plus particulièrement une nouvelle composition polymérique présentant des propriétés améliorées, notamment une tenue à la fatigue améliorée. Cette composition permet ainsi de fabriquer des tuyaux et conduites qui demeurent mécaniquement fiables sur le long terme. La composition selon l'invention est particulièrement appropriée pour la fabrication de tuyaux pour le transport de produits de synthèse liquides ou gazeux (par exemple pour le transport d'hydrogène).

Ceci est accompli en associant à un homopolymère PVDF un copolymère de VDF et d'au moins un autre comonomère fluoré copolymérisable avec le VDF tel que l'HFP, présentant une teneur élevée en comonomère fluoré, et présentant en conséquence des propriétés élastomériques, le copolymère étant présent dans la composition finale en une proportion de 10 à 35 %; et en ajoutant un plastifiant dans la composition.

### DESCRIPTION DE MODES DE REALISATION DE L'INVENTION

L'invention est maintenant décrite plus en détail et de façon non limitative dans la description qui suit.

L'homopolymère de fluorure de vinylidène utilisé dans le cadre de l'invention présente de préférence un indice de fluidité à chaud inférieur ou égal à 15 g / 10 min, avantageusement inférieur ou égal à 10 g / 10 min, et idéalement inférieur ou égal à 5 g / 10 min, selon la norme ISO 1133 (230°C, 12,5 kg), afin de garantir de bonnes propriétés de résistance mécanique.

Le copolymère de VDF et d'au moins un autre (co)monomère fluoré copolymérisable avec le VDF, utilisé dans le cadre de l'invention est de préférence un élastomère, qui est défini par l'ASTM dans le Spécial Technical Publication n°184 comme étant un matériau pouvant être étiré à la température ambiante à deux fois sa longueur initiale et qui, une fois relâché, reprend rapidement sa longueur initiale, à 10 % près.

Ce copolymère est obtenu par copolymérisation de monomères VDF et d'au moins un autre (co)monomère fluoré. Il a été constaté que les copolymères de VDF et d'un autre (co)monomère fluoré sont thermoplastiques à de faibles teneurs en comonomère fluoré, et sont élastomères à des teneurs élevées en comonomère fluoré.

Dans le cadre de l'invention, le taux ou proportion massique de (co)monomères fluorés est supérieure à 25 %.

Selon certains modes de réalisation, cette proportion massique de (co)monomère fluoré est supérieure ou égale à 26 %, ou à 27 %, ou à 28 %, ou à 29 %, ou à 30 % ou à 31 %, ou à 32 %, ou à 33 %, ou à 34 %, ou à 35 %, ou à 36 %, ou à 37 %, ou à 38 %, ou à 39%.

Selon certains modes de réalisation, cette proportion massique de (co)monomère fluoré est inférieure ou égale à 40%, ou à 39 %, ou à 38 %, ou à 37 %, ou à 36 %, ou à 35 %, ou à 34 %, ou à 33 %, ou à 32 %, ou à 31 %, ou à 30 %, ou à 29 %, ou à 28 %, ou à 27 %, ou à 26 %.

La proportion massique de comonomère fluoré dans le copolymère est de préférence déterminée par résonance magnétique nucléaire.

On peut notamment utiliser la méthode de RMN ¹⁹F suivante, mise au point pour un copolymère VDF / HFP.

Les échantillons de copolymère sont dissous dans un tube pour RMN de 5 mm de diamètre. Les échantillons de copolymère contenant plus de 10 % en poids de HFP sont dissous dans de l'acétone-d6 à 55°C. Une quantité de copolymère (environ 10 mg) est placée dans un tube et on ajoute du solvant pour remplir 5,5 cm de tube (environ 0,75 mL de solvant). On utilise un bloc chauffant pour porter les échantillons à la température souhaitée. Les échantillons sont chauffés pendant au moins une heure jusqu'à dissolution du solide et disparition du gel. Les tubes sont retournés pour vérifier l'absence de gel.

Les spectres sont acquis sur un spectromètre type Bruker DMX ou Varian Mercury 300 opéré à 55°C dans le cas du solvant acétone-d6 et sont analysés selon la méthode décrite dans « Composition and sequence distribution of vinylidene fluoride copolymer and terpolymer fluoroelastomers. Détermination by 19F NMR spectroscopy and corrélation with some properties ». M. Pianca et al, Polymer, 1987, vol.28, 224-230. L'exactitude des mesures est vérifiée en mesurant les intégrales de CF₃ et de CF et en les comparant pour voir si elles sont bien dans un rapport de 3 sur 1.

De préférence, le copolymère utilisé pour la préparation de la composition selon l'invention est essentiellement dépourvu d'homopolymère.

Le copolymère peut être fabriqué par le procédé décrit dans la publication de M. Pianca et al précitée.

Le copolymère est choisi de sorte à avoir une viscosité qui permette au mélange avec l'homopolymère de fluorure de vinylidène et le plastifiant, formant la composition selon l'invention, de présenter une morphologie nodulaire suffisamment stable à la transformation par extrusion.

Les plastifiants au sens de l'invention sont les composés définis dans l'ouvrage Encyclopedia of Polymer Science and Engineering, édité par Wiley & Sons (1989), p.568-569 et p.588-593. Ils peuvent être monomériques ou polymériques. On peut notamment citer le sébaçate de dibutyle, le phtalate de dioctyle, le N-n-butylsulfonamide, les polyesters polymériques et les combinaisons de ceux-ci. Les polyesters polymériques appropriés sont notamment ceux dérivés des acides adipique, azélaïque ou sébacique et des diols, et les combinaisons de ceux-ci, la masse moléculaire étant de préférence supérieure ou égale à 1500, plus particulièrement supérieure ou égale à 1800, et de préférence inférieure ou égale à 5000, et plus particulièrement inférieure ou égale à 2500. Des plastifiants de masse moléculaire excessive aboutiraient à une composition présentant une résistance à l'impact trop faible.

Le sébaçate de dibutyle constitue un plastifiant particulièrement avantageux.

La présence du plastifiant facilite la fabrication de la composition selon l'invention ou sa transformation pour fabriquer des produits ou objets divers. Elle améliore également la tenue au choc de la composition selon l'invention.

Outre le PVDF, copolymère et plastifiant, la composition selon l'invention peut comprendre divers additifs et / ou charges et / ou particules électriquement conductrices et / ou pigments ou colorants minéraux ou organiques.

Parmi les charges possibles, on peut citer de manière non limitative le mica, l'alumine, le talc, le noir de carbone, les fibres de verre, les composés macromoléculaires er le carbonate de calcium.

Parmi les charges possibles, on peut citer de manière non limitative les stabilisants UV (de préférence à l'exception des agents de type IRGANOX^{®}), les produits ignifuges, les stabilisants thermiques, les adjuvants de fabrication (de préférence à l'exception des polyoléfines et notamment des polymères à base d'éthylène).

Lorsqu'ils sont présents, les composés ci-dessus, distincts du PVDF, du copolymère et du plastifiant, sont présents à hauteur de 20 % au plus, de préférence de 15 % au plus, ou de 10 % au plus, ou de 7 % au plus, ou de 5 % au plus, ou de 3 % au plus, ou de 2 % au plus, ou de 1 % au plus (en proportion massique par rapport à la composition totale).

Selon un autre mode de réalisation, une composition selon l'invention consiste essentiellement en le PVDF, copolymère et plastifiant, voire consiste en le PVDF, copolymère et plastifiant.

L'invention a également pour objet un procédé de fabrication de la composition ci-dessus, comprenant le mélange de l'homopolymère, du copolymère et du plastifiant. Ce procédé de fabrication comprend toute méthode qui permet d'obtenir un mélange homogène des différents constituants. Parmi ces méthodes, on peut notamment citer le mélange à l'état fondu ou à sec. Plus particulièrement, la composition selon l'invention est préparée par mélange à l'état fondu de tous les constituants, sur un outil de compoundage comme une extrudeuse bi-vis, un comalaxeur ou un mélangeur interne ou à cylindres.

Selon un mode de réalisation, l'homopolymère et le copolymère sont sous forme sèche lors du mélange, de préférence sous forme de poudres.

Selon un mode de réalisation, le procédé ci-dessus comprend le pré-mélange de l'homopolymère et du copolymère sous forme de latex (ou émulsions), puis de sécher le pré-mélange en une poudre. Une variante consiste à pré-mélanger le PVDF sous forme de latex avec le copolymère sous forme de poudre (ou l'inverse), puis de sécher ce type de pré-mélange en une poudre.

Le plastifiant ainsi que les additifs éventuels peuvent être incorporés dans les compositions lors du mélange du PVDF et du copolymère, ou encore mélangés à l'un ou l'autre de ces constituants préalablement à leur mélange, ou encore lors du prémélange du PVDF et du copolymère selon les techniques de pré-mélange énoncées plus haut.

La teneur massique en copolymère dans la composition est de 10 à 35 %, notamment de 20 à 35 %, et de préférence de 25 à 35 %.

Selon certains modes de réalisation, la teneur massique en copolymère dans la composition est supérieure ou égale à 11 %, ou à 12 %, ou à 13 %, ou à 14 %, ou à 15 %, ou à 16 %, ou à 17 %, ou à 18 %, ou à 19 %, ou à 20 %, ou à 21 %, ou à 22 %, ou à 23 %, ou à 24 %, ou à 25 %, ou à 26 %, ou à 27 %, ou à 28 %, ou à 29 %, ou à 30 %, ou à 31 %, ou à 32 %, ou à 33 %, ou à 34 %.

Selon certains modes de réalisation, la teneur massique en copolymère dans la composition est inférieure ou égale à 34 %, ou à 33 %, ou à 32 %, ou à 31 %, ou à 30 %, ou à 29 %, ou à 28 %, ou à 27 %, ou à 26 %, ou à 25 %, ou à 24 %, ou à 23 %, ou à 22 %, ou à 21 %, ou à 20 %, ou à 19 %, ou à 18 %, ou à 17 %, ou à 16 %, ou à 15 %, ou à 14 %, ou à 13%, ou à 12%, ou à 11 %.

La teneur massique en plastifiant dans la composition finale est de préférence de 1 à 5 %, en particulier de 2 à 3,5 %. Une quantité excessive de plastifiant conduit à une variation volumique indésirable de la composition selon l'invention, par exsudation du plastifiant.

La composition selon l'invention permet de fabriquer tous types de tuyaux de transport de produits gazeux ou liquides, notamment destinés à transporter des produits gazeux pour la synthèse de produits chimiques ou destinés à transporter des produits de consommation individuelle, industrielle ou publique, à l'exception des ombilicaux et tubes flexibles utilisés on-shore et off-shore pour contenir et / ou transporter du pétrole brut, du gaz naturel, de l'eau et d'autres gaz utilisés pour le forage, tels que définis dans les normes API 17J, API 16C et API 15RS.

La composition selon l'invention permet également de fabriquer, seules ou en association avec d'autres produits, des câbles, corps creux, liants pour batteries rechargeables.

La composition selon l'invention est testée au moyen du test de fatigue, qui est décrit dans le document WO 2010/026356. Il consiste à déterminer, pour un échantillon donné de composition polymérique, le nombre de cycles à rupture (noté NCR), c'est-à-dire le nombre de cycles au bout duquel se produit la rupture de l'échantillon. Plus le NCR est élevé, meilleur est le résultat du test de fatigue.

Afin de réaliser un test de fatigue, on découpe des éprouvettes axisymétriques dans l'épaisseur d'un tube ou d'une bande extrudés, avec un rayon de courbure d'entaille de 4 mm et un rayon minimal de 2 mm. Ces éprouvettes sont considérées comme étant représentatives de la géométrie locale d'un tube ou tuyau utilisé dans les applications visées. Le test est effectué au moyen d'un dynamomètre servohydraulique, par exemple de type MTS 810. La distance entre mors est de 10 mm. On impose à l'éprouvette un allongement maximum de 1,4 mm et un rapport entre l'allongement minimum et l'allongement maximum de 0,21, ce qui correspond à un allongement minimum de 0,3 mm, avec un signal sinusoïdal ayant une fréquence de 1 Hz à une température de -10°C. Le résultat du test (NCR) est la moyenne des résultats obtenus sur 10 éprouvettes.

Le procédé pour évaluer la tenue à la fatigue des compositions polymériques comprend donc les étapes suivantes :
i) fournir une composition polymérique ;
ii) fabriquer plusieurs éprouvettes axisymétriques entaillées à partir de tubes ou bandes extrudées à partir de ladite composition ;
iii) soumettre lesdites éprouvettes à un test de fatigue en traction comprenant plusieurs cycles de chargement et déchargement uni-axial de l'éprouvette induisant à celle-ci des contraintes tri-axiales simulant les conditions de sollicitation d'un tube ou tuyau tel qu'utilisé dans les applications visées, et
iv) déterminer le nombre de cycles à rupture pour ladite composition polymérique.

Afin de réaliser un test de fluage à chaud, on effectue un essai de traction selon la norme ISO 527 (éprouvettes de type 1A à la vitesse de 50 mm/min) sur des éprouvettes non vieillies de la composition polymérique découpées dans l'épaisseur d'un tube ou d'une bande extrudée à partir de la composition polymérique. Ces éprouvettes sont conditionnées à la température de test de 130°C, 20 minutes avant l'essai. La contrainte au seuil de ces éprouvettes correspond à la contrainte nominale maximale supportée par les éprouvettes lors de la traction. Plus la contrainte est élevée, meilleure est la résistance au fluage de la composition polymérique.

### EXEMPLE

L'exemple suivant illustre l'invention sans la limiter.

Des compositions sont préparées à partir des composés suivants :
- Kynar® 401- PVDF homopolymère fabriqué par Arkema ayant un indice de indice de fluidité à chaud inférieur ou égal à 5 g / 10 min selon la norme ISO 1133 (230°C, 12,5 kg),
- Copolymère fluoré A : copolymère VDF-HFP (35% en poids d'HFP) ayant une viscosité en fondu supérieure ou égale à 3200 Pa.s sous 100 s⁻¹ à 230°C,
- Copolymère fluoré B : copolymère VDF-HFP (25% en poids d'HFP) ayant une viscosité en fondu supérieure ou égale à 1800 Pa.s sous 100 s⁻¹ à 230°C,
- Kynarflex® 2750: copolymère VDF-HFP (15% en poids d'HFP) ayant une viscosité en fondu de 2250 Pa.s sous 100 s⁻¹ à 230°C, commercialisé par Arkema.
- DBS : sébaçate de dibutyle (plastifiant).

Sept compositions sont testées, deux selon l'invention (formulations 1 et 2) et cinq à titre comparatif (formulations 3 à 7).

Ces compositions sont obtenues par mélange à l'état fondu de poudres ou granulés comprenant les différents composés polymériques ainsi que le plastifiant, sur un co-malaxeur de type PR 46 de marque Buss de diamètre 46 millimètres, de longueur 15 fois son diamètre équipé d'une extrudeuse de reprise, à un débit de 10kg /h. La vitesse de rotation de la vis du co-malaxeur est de 150 tr/min et celle de l'extrudeuse de reprise est de 15 tr/min et le profil de température est fixé de manière à obtenir une température matière d'environ 200°C. L'ensemble des composés est introduit en première entrée du co-malaxeur.

Les granulés obtenus sont ensuite extrudés en bande ou en tube d'épaisseur comprise entre 6 et 10mm à l'aide d'une extrudeuse monovis équipée d'une filière adaptée. Le profil de température est fixé de manière à obtenir une température matière comprise entre 210°C et 250°C.

Les performances de ces compositions sont mesurées, et notamment la tenue à la fatigue (selon le test NCR décrit ci-dessus, à la fois sur échantillons vieillis et non vieillis) et la tenue en fluage (selon le test décrit ci-dessus). Les résultats sont reportés dans le tableau 1 ci-dessous. « ND » signifie que les mesures respectives n'ont pas été réalisées.

On constate que les compositions selon l'invention présentent des résultats exceptionnellement bons en tenue à la fatigue. La tenue en fluage est également d'un bon niveau. D'autres tests, avec une mesure de température de transition ductile - fragile, ont également démontré les excellentes performances de la composition selon l'invention.

La comparaison des exemples 1 et 2 selon l'invention avec les exemples comparatifs 4 et 5 montrent que le choix du copolymère A permet d'obtenir de meilleurs résultats à l'état neuf et vieilli pour des taux de copolymère proches.

Lors du vieillissement de 30 jours à 150°C, il n'y a aucune évolution physico-chimique de la matrice PVDF ou du copolymère fluoré : l'effet du vieillissement n'a aucune incidence sur la masse moléculaire des composants ni sur la cristallinité de la matrice, qu'il s'agisse du taux ou de la morphologie cristalline. La seule évolution des matériaux constituant les exemples 1 et 2 ainsi que 4 et 5, induite par le vieillissement, est la perte du plastifiant après un maintien de 30 jours à 150°C dans l'air. Ainsi, la comparaison des résultats à l'état neuf et vieilli dans les exemples 1 et 2 selon l'invention et les exemples comparatif 4 et 5, permet de constater l'effet bénéfique de la présence du plastifiant (état neuf vs état vieilli), sur les propriétés de résistance à la fatigue à l'état neuf.

Lorsque l'on compare les exemples 7 et 4, on observe que la formulation 7 sans plastifiant est moins résistante que la formulation 4 à l'état vieilli. Dans les deux cas (exemple 4 vieilli et exemple 7 état neuf), les matériaux ne possèdent pas (ou plus) de plastifiant. En outre, leur formulation est proche en termes de taux et de nature du copolymère utilisé. Cependant les propriétés à l'état neuf de l'exemple 7 sont nettement inférieures à celle de celles de l'exemple 4 à l'état vieilli : cette différence s'explique par le fait que dans le cas de l'exemple 7, on a observé la présences de défauts d'extrusion et de microfissures qui n'existent pas dans le cas de la formulation 4 (qui contenait du plastifiant à l'état initial) et la présence de ces microfissures affecte fortement la résistance en fatigue du matériau. En effet, il est connu de l'homme de l'art que la résistance à la fatigue des matériaux, quels qu'ils soient, est très dépendante de la présence plus ou moins importante de défauts dans le matériau. On notera que ce type de défaut ou de microfissure n'est observable dans aucune des autres formulations contenant du plastifiant : ainsi, cela démontre clairement un autre effet bénéfique essentiel du plastifiant, sur la résistance à la fatigue, à savoir la possibilité d'extruder des pièces épaisses (ayant une épaisseur d'au moins 3 mm) de qualité et sans défauts.

La comparaison des exemples 1 et 2 selon l'invention et de l'exemple comparatif 5 montre l'intérêt d'utiliser un taux de copolymère de type A, suffisamment important, le taux présent dans la formulation 5 étant nettement insuffisant.

Enfin, la comparaison des exemples 1 et 2 selon l'invention ainsi que des exemples comparatif 3 et 4, avec l'exemple comparatif 6 montre l'intérêt d'utiliser un copolymère fluoré comportant un taux de comonomère suffisamment élevé pour produire une amélioration significative des propriétés en fatigue. Ainsi, bien que le taux de copolymère dans la formulation 6 soit comparable à celui de l'exemple 2 selon l'invention et que cette formulation possède du plastifiant, elle présente une faible résistance à la fatigue.

**Tableau 1**

| **Formulation** | **Composition** (% en poids) | **NCR** (éprouvette R4 - 1 Hz à -10°C) **Non vieilli** | **NCR** (éprouvette R4 1 Hz à -10°C) **Vieilli 30 j** à 150°C dans l'air | **Tenue en fluage** contrainte seuil en traction à 130°C [MPa] |
|---|---|---|---|---|
| **1 (inv.)** | 71% Kynar^{®}401 + 3% DBS + 26% copolymère fluoré A | >50000 | >10000 | ≥7 |
| **2 (inv.)** | 71% Kynar^{®}401 + 3% DBS + 20% copolymère fluoré A | >50000 | >10000 | ≥7 |
| **3 (comp.)** | 68% Kynar^{®}401 + 3% DBS + 29% copolymère fluoré B | 22100 | 3600 | 7,3 |
| **4 (comp.)** | 68% Kynar^{®}401 + 3% DBS + 25% copolymère fluoré B | <10000 | ≤2000 | ND |
| **5 (comp.)** | 92% Kynar^{®}401 + 3% DBS + 5% copolymère fluoré A | 1000 | 200 | ND |
| **6 (comp.)** | 77% Kynar^{®}401 + 3% DBS + 20% Kynarflex^{®}2750 | 515 | ND | ND |
| **7 (comp.)** | 75% Kynar^{®}401 + 25% copolymère fluoré B | 300 | ND | 10 |

## Revendications

1. Composition comprenant :
- un homopolymère de polyfluorure de vinylidène ;
- un copolymère de fluorure de vinylidène et d'au moins un autre comonomère fluoré copolymérisable avec le VDF, le copolymère étant présent dans la composition dans une proportion massique de 10 à 35 % ; et
- un plastifiant ;
la proportion massique en comonomère autre que le fluorure de vinylidène dans le copolymère étant supérieure à 25 %, et le plastifiant étant présent dans une proportion massique de 1 à 5 %.

2. Composition selon la revendication 1, dans laquelle ledit comonomère fluoré copolymérisable avec le VDF est l'hexafluoropropylène.

3. Composition selon la revendication 1 ou 2, dans laquelle le plastifiant est choisi parmi le sébaçate de dibutyle, le phtalate de dioctyle, le N-n-butylsulfonamide, les polyesters polymériques et les combinaisons de ceux-ci, et de préférence est du sébaçate de dibutyle.

4. Composition selon l'une des revendications 1 à 3, dans laquelle le plastifiant est présent dans une proportion massique de 2 à 3,5 %.

5. Composition selon l'une des revendications 1 à 4, dans laquelle le copolymère est présent dans une proportion massique de 20 à 35 %, de préférence de 25 à 35 %.

6. Composition selon l'une des revendications 1 à 5, dans laquelle la proportion massique de monomère hexafluoropropylène dans le copolymère est : supérieure ou égale à 26 %, et / ou inférieure ou égale à 40 %, de préférence inférieure ou égale à 37%.

7. Composition selon l'une des revendications 1 à 6, dans laquelle le copolymère est un élastomère.

8. Composition selon l'une des revendications 1 à 7, présentant une tenue à la fatigue à l'état non vieilli supérieure ou égale à 50000 cycles, de préférence supérieure ou égale, de préférence supérieure ou égale à 75000 cycles, de préférence supérieure ou égale à 100000 cycles en moyenne et / ou une tenue à la fatigue à l'état vieilli un mois à 150°C dans l'air supérieure ou égale à 5000 cycles, de préférence supérieure ou égale à 8000 cycles en moyenne, dans laquelle la tenue à la fatigue a été évaluée au moyen d'un procédé comprenant les étapes suivantes :
i) fournir une composition polymérique ;
ii) fabriquer plusieurs éprouvettes axisymétriques entaillées à partir de tubes ou bandes extrudées à partir de ladite composition, lesdites éprouvettes ayant un rayon de courbure d'entaille de 4 mm et un rayon minimal de 2 mm ;
iii) soumettre lesdites éprouvettes à un test de fatigue en traction au moyen d'un dynamomètre servohydraulique, ledit test comprenant plusieurs cycles de chargement et déchargement uni-axial de l'éprouvette, avec un distance entre mors de 10 mm, en imposant à l'éprouvette un allongement maximum de 1,4 mm et un rapport entre l'allongement minimum et l'allongement maximum de 0,21, avec un signal sinusoïdal ayant une fréquence de 1 Hz à une température de -10°C, ledit test induisant à l'éprouvette des contraintes tri-axiales simulant les conditions de sollicitation d'un tube ou tuyau tel qu'utilisé dans les applications visées, et
iv) déterminer le nombre de cycles à rupture pour ladite composition polymérique.

9. Composition selon l'une des revendications 1 à 8, consistant en l'homopolymère de polyfluorure de vinylidène, le copolymère de fluorure de vinylidène et d'hexafluoropropylène et le plastifiant.

10. Procédé de fabrication d'une composition selon l'une des revendications 1 à 9, comprenant le mélange de l'homopolymère, du copolymère et du plastifiant.

11. Procédé selon la revendication 10, dans lequel l'homopolymère et le copolymère sont sous forme sèche lors du mélange avec le plastifiant, de préférence sous forme de poudres, et de préférence le mélange est effectué à l'état fondu.

12. Procédé selon l'une des revendications 10 à 11, comprenant le mélange de l'homopolymère et du copolymère sous forme de latex, le séchage du mélange d'homopolymère et de copolymère, et la combinaison du mélange séché avec le plastifiant, de préférence à l'état fondu.

13. Tuyau de transport terrestre fabriqué à partir de la composition selon l'une des revendications 1 à 9.

14. Utilisation du tuyau selon la revendication 13, pour le transport de produits de synthèse à l'état gazeux, notamment pour le transport d'hydrogène, d'oxygène, de vapeur d'eau, de monoxyde de carbone, d'ammoniac, de fluorure d'hydrogène, d'acide chlorhydrique, de sulfure d'hydrogène, de tout gaz issu du craquage des hydrocarbures, ou de mélanges de ceux-ci.

15. Utilisation du tuyau selon la revendication 13 pour le transport de produits à l'état liquide, notamment pour le transport d'eau, de solvants ou de mélanges de ceux-ci.

16. Utilisation du tuyau selon la revendication 13 comme tuyau souterrain pour station-service.

17. Utilisation du tuyau selon la revendication 13 comme tuyau d'alimentation en carburant pour véhicules.

18. Câble électrique fabriqué à partir de la composition selon l'une des revendications 1 à 9.

19. Liant de particules conductrices pour une batterie rechargeable, fabriqué à partir de la composition selon l'une des revendications 1 à 9.

20. Utilisation de la composition selon l'une des revendications 1 à 9, pour la fabrication de tuyaux, câbles électriques ou liants de particules conductrices selon l'une des revendications 13, 18 ou 19.

## Patentansprüche

1. Zusammensetzung, die aufweist:
- ein Polyvinylidenfluorid-Homopolymer;
- ein Copolymer aus Vinylidenfluorid und mindestens einem anderen fluorierten Comonomer, das mit VDF copolymerisierbar ist, wobei das Copolymer in der Zusammensetzung in einem Masseanteil von 10 bis 35 % enthalten ist; und
- einen Weichmacher;
wobei der Masseanteil des Comonomers, das von Vinylidenfluorid verschieden ist, in dem Copolymer über 25 % liegt und der Weichmacher in einem Masseanteil von 1 bis 5 % enthalten ist.

2. Zusammensetzung nach Anspruch 1, wobei es sich bei dem mit VDF copolymerisierbaren fluorierten Comonomer um Hexafluorpropylen handelt.

3. Zusammensetzung nach Anspruch 1 oder 2, wobei der Weichmacher unter Dibutylsebacat, Dioctylphthalat, N-n-Butylsulfonamid, polymeren Polyestern und deren Kombinationen und vorzugsweise unter Dibutylsebacat ausgewählt ist.

4. Zusammensetzung nach einem der Ansprüche 1 bis 3, wobei der Weichmacher in einem Masseanteil von 2 bis 3,5 % enthalten ist.

5. Zusammensetzung nach einem der Ansprüche 1 bis 4, wobei das Copolymer in einem Masseanteil von 20 bis 35 % und vorzugsweise 25 bis 35 % enthalten ist.

6. Zusammensetzung nach einem der Ansprüche 1 bis 5, wobei der Masseanteil des Hexafluorpropylen-Monomers in dem Copolymer ist: größer oder gleich 26 % und/oder kleiner oder gleich 40 %, vorzugsweise kleiner oder gleich 37 %.

7. Zusammensetzung nach einem der Ansprüche 1 bis 6, wobei das Copolymer ein Elastomer ist.

8. Zusammensetzung nach einem der Ansprüche 1 bis 7, die im nicht gealterten Zustand im Mittel eine Ermüdungsfestigkeit von größer oder gleich 50000 Zyklen, vorzugsweise größer oder gleich 75000 Zyklen und bevorzugt größer oder gleich 100000 Zyklen aufweist und/oder in einem einen Monat bei 150 °C in Luft gealterten Zustand im Mittel eine Ermüdungsfestigkeit von größer oder gleich 5000 Zyklen und vorzugsweise größer oder gleich 8000 Zyklen aufweist, wobei die Ermüdungsfestigkeit mit Hilfe eines Verfahrens bestimmt wird, das die folgenden Schritte umfasst:
i) Bereitstellen einer Polymerzusammensetzung;
ii) Herstellen mehrerer gekerbter achsensymmetrischer Proben aus Rohren oder Bändern, die aus der Zusammensetzung extrudiert wurden, wobei die Proben einen Krümmungsradius der Kerbe von 4 mm und einen minimalen Radius von 2 mm aufweisen;
iii) Durchführen eines Ermüdungsversuchs unter Zugbelastung mit Hilfe eines servohydraulischen Dynamometers an den Proben, wobei der Test mehrere uniaxiale Belastungs- und Entlastungszyklen der Probe mit einem Abstand zwischen den Backen von 10 mm umfasst, indem die Probe einer Maximaldehnung von 1,4 mm und einem Verhältnis von Minimaldehnung und Maximaldehnung von 0,21 mit einem Sinussignal einer Frequenz von 1 Hz und bei einer Temperatur von -10 °C ausgesetzt wird; wobei der Test an der Probe triaxiale Belastungen induziert, die die Beanspruchungsbedingungen eines Rohrs oder Schlauchs bei den beabsichtigten Verwendungen simulieren, und
iv) Bestimmen der Anzahl der Zyklen bis zum Bruch für die Polymerzusammensetzung.

9. Zusammensetzung nach einem der Ansprüche 1 bis 8, die aus dem Homopolymer von Polyvinylidenfluorid, dem Copolymer aus Vinylidenfluorid und Hexafluorpropylen und dem Weichmacher besteht.

10. Verfahren zur Herstellung einer Zusammensetzung nach einem der Ansprüche 1 bis 9, das ein Vermischen der Homopolymers, des Copolymers und des Weichmachers umfasst.

11. Verfahren nach Anspruch 10, wobei das Homopolymer und das Copolymer in trockener Form vorliegen, wenn sie mit dem Weichmacher vermischt werden, vorzugsweise in Form von Pulver, wobei das Mischen vorzugsweise im geschmolzenen Zustand durchgeführt wird.

12. Verfahren nach einem der Ansprüche 10 bis 11, das umfasst, das Homopolymer und das Copolymer in Form von Latex zu vermischen, das Gemisch aus Homopolymer und Copolymer zu trocknen und das trockene Gemisch mit dem Weichmacher vorzugsweise in geschmolzenem Zustand zu kombinieren.

13. Schlauch für den Überlandtransport, der aus einer Zusammensetzung nach einem der Ansprüche 1 bis 9 hergestellt ist.

14. Verwendung des Schlauchs nach Anspruch 13 zum Transport von Syntheseprodukten im gasförmigen Zustand, insbesondere zum Transport von Wasserstoff, Sauerstoff, Wasserdampf, Kohlenmonoxid, Ammoniak, Fluorwasserstoff, Chlorwasserstoff, Schwefelwasserstoff, allen durch Cracken von Kohlenwasserstoffen gebildeten Gasen oder deren Gemischen.

15. Verwendung des Schlauchs nach Anspruch 13 zum Transport von Produkten im flüssigen Zustand, insbesondere für den Transport von Wasser, Lösungsmitteln oder deren Gemischen.

16. Verwendung des Schlauchs nach Anspruch 13 als unterirdischer Schlauch für Tankstellen.

17. Verwendung des Schlauchs nach Anspruch 13 als Schlauch für die Zufuhr von Kraftstoffen für Fahrzeuge.

18. Elektrokabel, das aus einer Zusammensetzung nach einem der Ansprüche 1 bis 9 hergestellt ist.

19. Bindemittel leitfähiger Partikel für eine wiederaufladbare Batterie, das aus einer Zusammensetzung nach einem der Ansprüche 1 bis 9 hergestellt ist.

20. Verwendung einer Zusammensetzung nach einem der Ansprüche 1 bis 9 zur Herstellung von Schläuchen, Elektrokabeln oder Bindemitteln leitfähiger Partikel nach einem der Ansprüche 13, 18 oder 19.

## Claims

1. A composition comprising:
- a polyvinylidene fluoride homopolymer;
- a copolymer of vinylidene fluoride and of at least one other fluorinated comonomer which is copolymerizable with VDF, the copolymer being present in the composition in a proportion by weight of 10 to 35%; and
- a plasticizer;
the proportion by weight of comonomer other than vinylidene fluoride in the copolymer being greater than 25%, and the plasticizer being present in a proportion by weight of 1 to 5%.

2. The composition as claimed in claim 1, in which said fluorinated comonomer which is copolymerizable with VDF is hexafluoropropylene.

3. The composition as claimed in claim 1 or 2, in which the plasticizer is chosen from dibutyl sebacate, dioctyl phthalate, N(n-butyl)sulfonamide, polymeric polyesters and the combinations of these, and is preferably dibutyl sebacate.

4. The composition as claimed in one of claims 1 to 3, in which the plasticizer is present in a proportion by weight of 2 to 3.5%.

5. The composition as claimed in one of claims 1 to 4, in which the copolymer is present in a proportion by weight of 20 to 35%, preferably of 25 to 35%.

6. The composition as claimed in one of claims 1 to 5, in which the proportion by weight of hexafluoropropylene monomer in the copolymer is greater than or equal to 26% and/or less than or equal to 40%, preferably less than or equal to 37%.

7. The composition as claimed in one of claims 1 to 6, in which the copolymer is an elastomer.

8. The composition as claimed in one of claims 1 to 7, exhibiting a fatigue strength in the nonaged state of greater than or equal to 50 000 cycles, preferably of greater than or equal, preferably of greater than or equal to 75 000 cycles, preferably of greater than or equal to 100 000 cycles, on average, and/or a fatigue strength in the state aged for one month at 150°C in air of greater than or equal to 5000 cycles, preferably of greater than or equal to 8000 cycles, on average, in which the fatigue strength was evaluated by means of a process comprising the following stages:
i) providing a polymeric composition;
ii) manufacturing several notched axisymmetric test specimens from pipes or strips extruded from said composition, said specimens having a notch radius of curvature of 4 mm and a minimum radius of 2 mm;
iii) subjecting said test specimens to a tensile fatigue test carried out by means of a servo-hydraulic testing machine, comprising several cycles of uniaxial loading and unloading of the test specimen, the distance between jaws being up 10 mm, the maximum elongation of 1.4 mm and a ratio of the minimum elongation to the maximum elongation of 0.21 mm with a sinusoidal sign having a frequency of 1 Hz at a temperature of-10°C, inducing in the latter triaxial stresses simulating the conditions of stressing of a pipe as used in the applications targeted, and
iv) determining the number of cycles to failure for said polymeric composition.

9. The composition as claimed in one of claims 1 to 8, consisting of the polyvinylidene fluoride homopolymer, the copolymer of vinylidene fluoride and of hexafluoropropylene, and the plasticizer.

10. A process for the manufacture of a composition as claimed in one of claims 1 to 9, comprising the blending of the homopolymer, the copolymer and the plasticizer.

11. The process as claimed in claim 10, in which the homopolymer and the copolymer are in the dry form during the blending with the plasticizer, preferably in the form of powders, and the blending is preferably carried out in the molten state.

12. The process as claimed in either of claims 10 and 11, comprising the blending of the homopolymer and the copolymer in the latex form, the drying of the blend of homopolymer and copolymer, and the combining of the dried blend with the plasticizer, preferably in the molten state.

13. A terrestrial transportation pipe, manufactured from the composition as claimed in one of claims 1 to 9.

14. The use of the pipe as claimed in claim 13 for the transportation of synthetic products in the gas state, in particular for the transportation of hydrogen, oxygen, steam, carbon monoxide, ammonia, hydrogen fluoride, hydrochloric acid, hydrogen sulfide, any gas resulting from the cracking of hydrocarbons, or mixtures of these.

15. The use of the pipe as claimed in claim 13 for the transportation of products in the liquid state, in particular for the transportation of water, solvents, or mixtures of these.

16. The use of the pipe as claimed in claim 13 as underground pipe for a service station.

17. The use of the pipe as claimed in claim 13 as fuel feed pipe for vehicles.

18. An electric cable, manufactured from the composition as claimed in one of claims 1 to 9.

19. A binder for conductive particles for a rechargeable battery, manufactured from the composition as claimed in one of claims 1 to 9.

20. The use of the composition as claimed in one of claims 1 to 9 in the manufacture of pipes, electric cables or binders for conductive particles as claimed in one of claims 13 to 19.
